# EUROPEAN PATENT APPLICATION

(11) **EP 2 747 437 A1**
(43) Date of publication of application: **25.06.2014**
(21) Application number: 12306640.9
(22) Date of filing: 20.12.2012
(51) Int. Cl.: H04N 21/258, H04N 21/41, H04N 21/6334

(54) **Method for associating a mobile device with a digital television subscription**

(71) Applicant: Alcatel Lucent, 75007 Paris (FR)
(72) Inventor: Mampaey, Marcel, 1090 Brussels (BE); Everaert, Patrick, 2018 Antwerpen (BE)
(74) Representative: ALU Antw Patent Attorneys

(57) **Abstract**

The present invention relates to a method for associating a mobile device with a digital television subscription in a digital television system comprising an application server for maintaining the digital television subscription and a digital content receiving client device with a coupled display. The digital content receiving client device is coupled to the application server over an internet protocol network. The method comprises the step of the digital content receiving client device sending a predetermined signal for starting the associating of the mobile device with the subscription towards the application server and the step of the application server at intercepting the predetermined signal, determining subscription identification and additionally generating a unique code. Uniquely associating said mobile device with said digital television subscription. Subsequently the application server sends the unique code generated towards said set-top-box. The mobile device retrieves the unique code from the digital content receiving client device at triggering by the digital content receiving client device and the mobile device based on the unique code retrieved, request the application server to be associated with the subscription based on the retrieved unique code. The application server subsequently compares the unique code of the mobile device with the generated unique code generated by the application server and at successful comparison, associates the mobile device with the subscription based on the subscription identification

## Description

The present invention relates to the field of associating an additional mobile device with a digital television subscription in a digital television system.

According to embodiments, the invention relates to a method for associating a mobile device with a digital television subscription in a digital television system comprising an application server for maintaining said digital television subscription and a digital content receiving client device with a coupled display, (the digital content receiving client device being adapted to receive a digital signal from the application server), the digital content receiving client device being coupled to the application server over an internet protocol network to a related system and related application server.

Today mobile devices such as Smart-phones or Tablets are used more and more as a second screen when watching TV to allow users to access additional information or perform specific actions (e.g. voting) which are related to the TV program being displayed. Most of the time such additional information is the same for all users and the service is not customized. Also, the user may want to perform certain actions in relation with the TV subscription or access certain content that is only accessible to users with an associated digital Television subscription account. However, this can only be done if the device used as a second screen has been associated beforehand to the TV subscription account in a secure fashion. This association may also be called device registration.

Such association of a mobile device can be performed by a smart phone or a tablet by downloading, from an applications store, a dedicated application that enables second screen features and access to additional content only available to digital TV subscribers such as IPTV subscribers or IP connected television subscribers or video over the Internet subscribers. When the application is started for the first time it will go online to a special server for device registration and the application will require the user to input some special reference or code such as can be found on the subscriber's monthly bill.

Alternatively the user may use the browser on the smart-phone or tablet device to go to a special Web site to perform the device registration as before using the special reference code, which enables the device to access additional content only available to digital television subscribers.

Disadvantageously, this process of associating a mobile device with a Television subscription device is not automatic and always involves a number of manual steps to be performed by the user, which does not provide the best possible user experience and is prone to errors. Moreover, these manual steps create an unnecessary threshold such that some users may not go through these steps, which results in missed opportunities for both user and TV service provider.

An objective of the present invention is to provide a method for associating a mobile device with a digital television subscription of the above known type but wherein the associating of the mobile device with a digital television subscription is facilitated.

According to the invention, this object is achieved by the method described in claim 1, the digital content receiving client device defined in claim 6, the application server as defined in claim 7, the mobile device as defined in claim 8.

According to this method the digital content receiving client device first sends a predetermined signal for starting the process of associating the mobile device with the meant subscription towards the application server. Subsequently, the application server, at intercepting the predetermined signal, first determines a subscription identification of the meant subscription account and additionally generates a unique code for making the association of the mobile device with the subscription secure. The subscription account has an association with the digital content receiving client device where the predetermined signal originates from. Thereafter, the application server sends the generated unique code towards the digital content receiving client device. In turn, the mobile device retrieves the unique code from the digital content receiving client device, at triggering of the mobile device, for retrieving the unique code, from the digital content receiving client device. The retrieving of the code may be performed by the mobile device by means of a code reading application installed at such mobile device, reading the code displayed at a screen that is coupled to the digital content receiving client device.

Alternatively such unique code may be obtained by means of another application at the mobile device which application is adapted to extract the unique code from audio signal received in which case on top of this audio signal the unique code may be embedded in the form of an inaudible audio watermark and forwarded to speakers coupled to the digital content receiving client device that plays the audio signal with the code embedded as an audio watermark.

Subsequently, the mobile device, based on the unique code retrieved, requests the application server to be associated with the subscription based on the retrieved unique code where the application server compares the unique code provided by the mobile device with the unique code generated by the application server and finally at a positive finding by the application server of a successful comparison, i.e. the codes are equal, the application server associates the mobile device with the subscription based on the subscription identification that corresponds to the meant subscription.

The digital content receiving client device may, based on the received unique code, generate a QR code or a video watermark or an audio watermark. The digital content receiving client device may add a visible or invisible video watermark to the normal television program video signal in a way that it can be easily read by the mobile device equipped with a camera and an appropriate video watermark reading application. The set-top box may add an audible or inaudible audio watermark to the normal television program audio signal in a way that it can be easily listened to by the mobile device equipped with a microphone and an appropriate audio watermark detection application, which are applications readily available. The set-top box can embed the watermark using known techniques such as e.g. video watermarking in the pixel domain or audio watermarking using phase coding or phase modulation.

Furthermore, the triggering of the retrieving may be performed by means of messaging by the digital content receiving client device, e.g. inviting the user to use a mobile device to retrieve the code from the digital content receiving client device for instance by displaying invitation at coupled screen of the digital content receiving client device e.g. a set-top box.

The digital content receiving client device may be a digital set-top box, an IPTV set-top box, a connected TV or a connected TV with display screen.

A digital Television subscription may be a short-term or long-term agreement to receive or be given access to digital content.

Such subscription may include an agreement with a 'registered user for a long termed agreement or may include a single transaction wherein a user is given the right to consume a video on demand asset.

According to an embodiment of the invention the predetermined signal is an IGMP channel change message (e.g. channel 99) that is sent towards the application server. Alternatively, the message is intercepted by a coupled proxy server that receives the IGMP message and subsequently translates the message in a request destined to the application server to start the process of associating a mobile device with the meant subscription.

According to another embodiment of the invention the predetermined signal is a signal generated responsive to the pushing of a predefined button e.g. the yellow button or the red button of a Remote control associated with the digital content receiving client device.

According to another embodiment of the invention the unique code generated by said application server can be displayed in the form of a Quick Response code, further referred to as a QR code.

According to another aspect of the invention, the unique code generated by the application server can be displayed in the form of a QR code and the retrieving of the unique code by the mobile device from the digital content receiving client device at triggering by the digital content receiving client device is reading the QR code from a screen coupled to the digital content receiving client device by means of e.g. a QR-application installed at the mobile device.

It is to be noticed that the term 'comprising', used in the claims, should not be interpreted as being restricted to the means listed thereafter. Thus, the scope of the expression 'a device comprising means A and B' should not be limited to devices consisting only of components A and B. It means that with respect to the present invention, the only relevant components of the device are A and B.

Similarly, it is to be noticed that the term 'coupled', also used in the claims, should not be interpreted as being restricted to direct connections only. Thus, the scope of the expression 'a device A coupled to a device B' should not be limited to devices or systems wherein an output of device A is directly connected to an input of device B. It means that there exists a path between an output of A and an input of B which may be a path including other devices or means.

The above and other objects and features of the invention will become more apparent and the invention itself will be best understood by referring to the following description of an embodiment taken in conjunction with the accompanying drawings wherein:
Fig. 1 represents a schematic diagram of the system wherein the associating of an additional mobile device with an IPTV television subscription according to the present invention is executed.

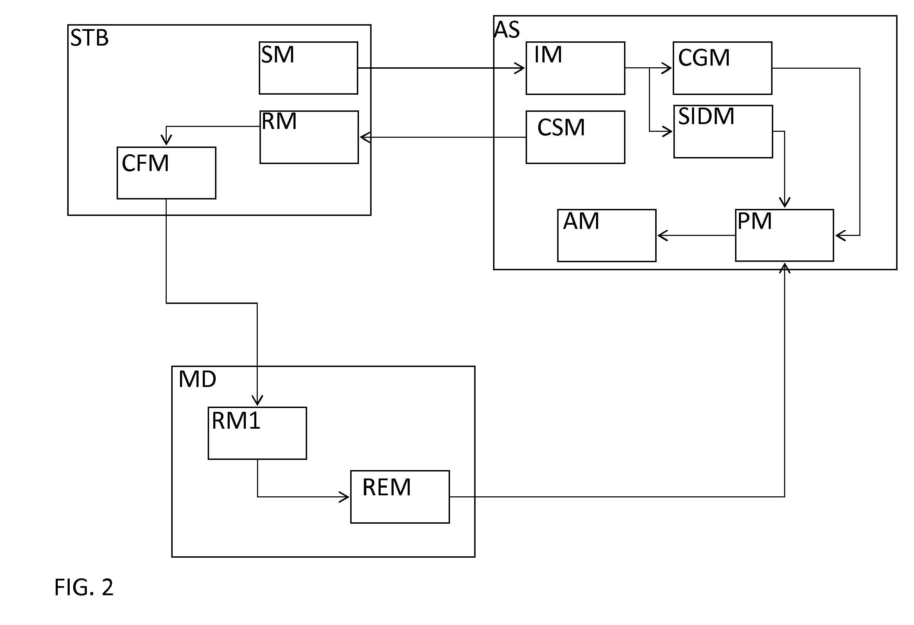

Fig. 2 represents a schematic diagram of the relevant devices according to an embodiment of the present invention.

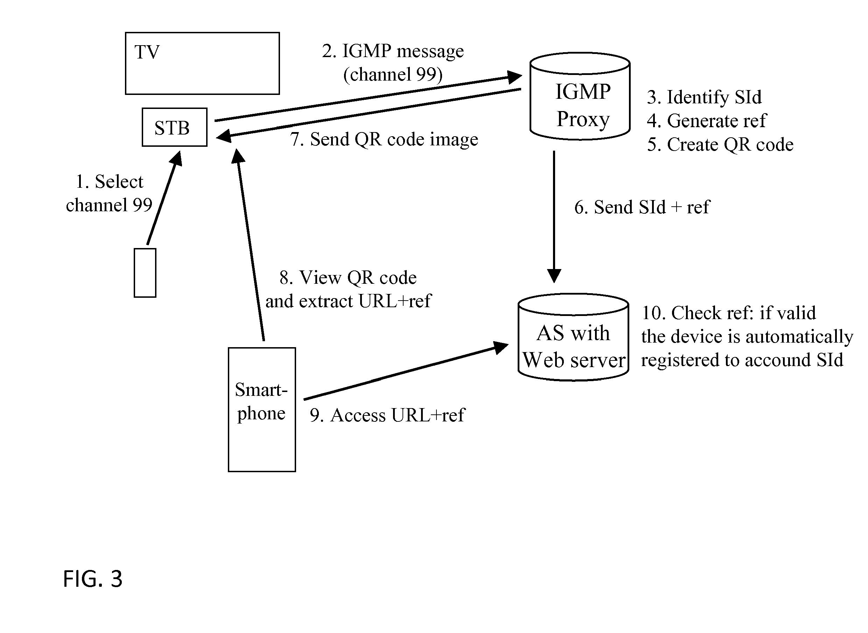

Fig. 3 represents an alternative embodiment of the present invention.

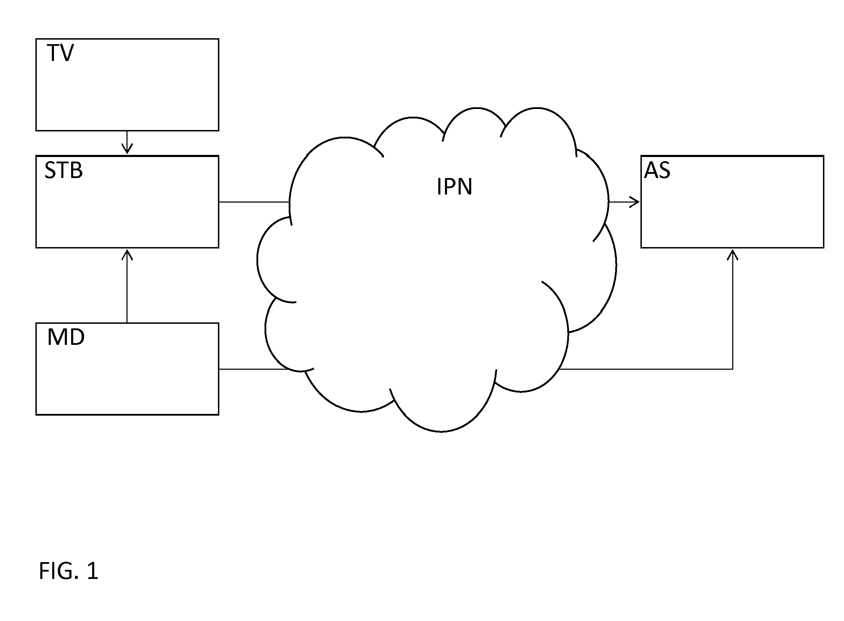

In the following paragraphs, referring to the drawing in FIG.1, an implementation of the system is described. In the subsequent paragraph, all connections between mentioned elements are defined.

Subsequently all relevant functional means of the mentioned system as presented in FIG.1 are described followed by a description of all interconnections. In the succeeding paragraph the actual execution of the communication system is described.

The system of the present invention comprises an IPTV application server AS for maintaining said IPTV television subscription and a set-top box STB with a coupled display TV. The set-top box STB is coupled to the IPTV application server AS over an internet protocol network IPN.

The Set-top box STB for use in the system for associating a mobile device MD with an IPTV television subscription comprises a sending means SM for sending a predetermined signal for requesting the associating of a mobile device MD with the subscription, towards the application server AS, a receiving means RM for receiving a unique code generated by the application server AS and a code forwarding means CFM for forwarding the unique code generated by the application server AS towards the mobile device MD at triggering by the set-top box STB.

Further, the Application server AS comprises an intercepting means IM for intercepting the predetermined signal for requesting the associating of the mobile device MD with the subscription, a code generating means CGM for at intercepting the predetermined signal, generating a unique code, a subscription identification determination means SIDM for at intercepting the predetermined signal, determining an identification from the subscription and a code sending means CSM for sending the unique code generated towards the set-top-box STB. The Application server further comprises comparing means PM for comparing the unique code received from the mobile device MD with the generated unique code generated by the application server AS and an associating means AM for at a successful comparison (i.e. the unique code received from the mobile device MD with the generated unique code generated are equal), associating the mobile device MD with the subscription based on the subscription identification of the IPTV subscription.

The mobile device MD according to this embodiment of the invention comprises a retrieving means RM1 for retrieving the unique code from the set-top box STB at triggering by the set-top box STB and a requesting means REM for requesting the application server AS to compare the unique code of the mobile device MD with the generated unique code generated by said application server AS.

The retrieving means RM1 of the mobile device may be a QR code reading application installed on mmost smart-phones. The reason for this default is the broad popularity of use of these codes, which pushes manufacturers to pre-install QR-code reader apps on their phones. Such encoding and decoding of QR codes is universal and so it is easy to encode and decode QR codes. The QR-code reading application will extract the information (e.g. a URL) encoded in the QR-code and forward it to the browser installed on the mobile device on which the application is installed.

The sending means SM of the Set-top box STB has an output-terminal that is at the same time an output-terminal of the set-top box STB. The receiving means RM has an input-terminal that is at the same time an input-terminal of the set-top box STB. The receiving means RM further is coupled to the code forwarding means CFM that in turn has an output-terminal that is at the same time an output-terminal of the set-top box STB.

The intercepting means IM of the application server further has an input-terminal that is at the same time an input-terminal of the application server AS that further is coupled with an output to an input of the code generating means CGM and to an input of the subscription identification determination means SIDM. The code generating means CGM is coupled with an output to an input of the comparing means and to an input of the code sending means CSM. The code sending means CSM has an output-terminal that is at the same time an output-terminal of the application server AS.

The subscription identification determination means SIDM further is coupled with an output to an input of the comparing means PM. The comparing means PM is coupled with an output to an input of the associating means AM. The comparing means PM further has an input-terminal that is at the same time an input-terminal of the application server AS.

The retrieving means RM1 of the mobile device MD has an input-terminal that is at the same time an input-terminal of the mobile device MD and is further coupled with an output to an input of the requesting means REM that has an output-terminal that is at the same time an output-terminal of the mobile device MD.

In order to explain the execution of the present invention it is assumed a user A of an IPTV system, currently watching a certain program like the news at channel CNN at a display TV coupled to the set-top box STB. Now it is further assumed that this user A wishes to access additional information that is related to the TV program, i.e. the news at CNN, to be displayed at a Tablet PC or mobile device MD of the user, as a second screen when watching the mentioned TV program.

Most of the time the additional information is the same for all users and the service is not customized. Also, the user A may want to perform certain actions in relation with the TV subscription or access certain content that is only accessible to users with an associated TV (IPTV) subscription account. However, this can only be done if the device used as a second screen has been associated beforehand to the TV subscription account in a secure fashion.

In order to factually associate the tablet MD of user A with the associated TV (IPTV) subscription account the following procedure is followed:
The first step is to let the user A, by means of the remote control, that e.g. is connected via infrared or otherwise to the set-top box STB, instruct the set-top box to send a predetermined signal for requesting the associating of the tablet MD with the subscription, towards the application server AS where the predetermined signal may be a channel change request to select e.g. channel 99 or a signal associated with the selection of the yellow button of the remote control.

Subsequently the sending means SM of the set-top box STB, in response to the instruction of the user A, sends the predetermined signal, e.g. an IGMP channel change signaling message or another specific signal e.g. associated with the selection of the yellow button on said remote control for requesting the associating of the tablet MD with the subscription of user A, towards the application server AS.

Subsequently at receipt, by the intercepting means IM of the application server AS, of the predetermined signal, e.g. the IGMP channel change signaling message and at detection of this predetermined signal, the subscription identification determination means SIDM at intercepting of the predetermined signal, determines a subscriber identification SI, being related to user A from the subscription based on the intercepted predetermined message. The subscription identification determination means SIDM finds the subscriber identification SId.

Moreover, at detection of this predetermined signal, the code generating means CGM at intercepting of the predetermined signal generates a unique code. The code generating means CGM of the application server AS produces a pseudo-random, unique and short-lived code. The code is short-lived for security reasons, i.e., the code remains usable for maximum a few minutes (say 10 minutes). Let us suppose the unique code is: ref-12345-hudhfydybbtddf.

The application server AS combines the unique code C with a URL (the URL being an address of a Web Server that is associated with the application server AS for use by the tablet MD and which URL points to a Web Server attached to the application server AS and encodes this information into an image that can be easily exploited by a smart-phone or tablet MD, such as, e.g. a QR code.

Further suppose that the URL is a short URL such as e.g.: http://regbgc.be being the address of the web-server associated with the application server AS. The by the application server AS generated combination of both URL and reference number is for example: http://regbgc.be/ref-12345-hudhfydybbtddf.

After generation of the unique code, i.e. the QR-code, the code sending means CSM forwards the unique code generated towards the set-top-box STB which unique code is received by the receiving means RM of the set-top-box STB.

Further at triggering by the set-top box STB, the code forwarding means CFM forwards the unique code generated by the application server AS towards the mobile device MD. The triggering, factually may be done by the presenting the QR code at the screen coupled to the set-top box by embedding this QR code in an MPEG stream showing this code together with some explanation meant for the human user. The user for instance will be shown some explanation on the screen suggesting pointing his/her smart-phone or tablet PC MD to the image of the QR code and taking a snapshot.

The image is sent in a uni-cast stream to the user's A set-top box STB (this can be a low bandwidth highly compressed stream as long as the QR code is easily readable).

Alternatively the QR code may be displayed automatically, eventually in overlay of the normally playing channel, to make the user experience even more convenient.

At triggering, e.g. by instruction presented at the screen, the retrieving means RM1 of the tablet MD, e.g. being an QR code reading application being installed at the tablet MD of user A retrieves the unique code from the set-top box STB by reading the QR code.

The QR code read, includes the address of the application server AS i.e. the URL together with the unique code generated by the application server AS. Both the address as the unique code are obtained from the QR code by some processing means in cooperation with the QR code reading application by extracting both the URL and the unique code from the QR code read.

The QR-code reading application extracts the URL encoded in the QR-code and forward it to the browser installed on the mobile device MD.

The web browser based on the extracted URL contacts the web server that is associated to the application server AS.

The URL extracted is applied for determining the web-server associated with the application server AS and to initiate access to this Web Server, and subsequently provide the associated unique code to the Web server that is associated with the application server AS.

The unique code received at the web-server is handed over to the comparing means PM of the application server that compares the unique code with the code generated by the code generating means CGM and consequently if the code is valid by means of the associating means AM of the application server AS associates the subscriber subscription with identification SId with the smart-phone that provided the code. Consequently the smart-phone of user A is successfully registered and associated with the subscriber account identified with Sid here being related to user A. Most of the above steps are automatic and process quickly.

Next, a Web server forming part of the applications server AS (not shown in the figure) may perform necessary security measures according to the known state of the art to ensure that subsequent access from the user device are automatically authenticated as being from a device associated with subscriber account SId. If special applications are needed for the device to access added value data, the Web server can propose these apps for download by the device in an automated fashion.

Consequently the mobile device MD is automatically and securely associated with the IPTV subscription with identification SId without the user needing to perform complex steps or enter special codes.

The idea is to fully automate the registration process of associating the second device with the IPTV subscription account without the user needing to perform too complex or too many manual steps or have to enter special codes. In order to achieve this the idea is to let the user simply select a pre-determined TV channel on the main TV device (e.g. channel 99), and consequently let a server in the network detect this action and generate a special and per-user unique code, e.g. displayed in the form of a QR code, and then send this code to the user's TV device in the form of an MPEG stream. The image displayed suggests the user to point the secondary device to the screen and take a snapshot of the QR code. The device should be able to extract a URL from this QR code and the unique code, and consequently access the said URL and provide the unique code to the server. This server will have received from the IPTV infrastructure both the unique code and the associated IPTV subscription identification. Consequently the second device is automatically and securely associated with the said IPTV subscription without the user needing to perform complex steps or enter special codes.

It is to be noted that although an embodiment with central Application server is disclosed the functionality could be distributed over further distributed network elements.

It is to be noted that although an IPTV system embodiment is described alternative embodiments could be a digital cable television system or a digital video service over the Internet (over IP).

A final remark is that embodiments of the present invention are described above in terms of functional blocks. From the functional description of these blocks, given above, it will be apparent for a person skilled in the art of designing electronic devices how embodiments of these blocks can be manufactured with well-known electronic components. A detailed architecture of the contents of the functional blocks hence is not given.

While the principles of the invention have been described above in connection with specific apparatus, it is to be clearly understood that this description is merely made by way of example and not as a limitation on the scope of the invention, as defined in the appended claims.

## Claims

1. Method for associating a mobile device (MD) with a digital television subscription in a digital television system comprising an application server (AS) for maintaining said digital television subscription and a digital content receiving device (STB) with a coupled display, said digital content receiving client device (STB) being coupled to said application server (AS) over an internet protocol network (IPN), **CHARACTERISED IN THAT** said method comprises the following steps:
a. said digital content receiving client device (STB) sending a predetermined signal for starting said associating of said mobile device with said subscription, to said application server (AS); and
b. said application server (AS) at intercepting said predetermined signal, determining a subscription identification and additionally generating a unique code uniquely associating said mobile device with said digital television subscription; and
c. sending said unique code generated towards said digital content receiving client device (STB); and
d. said mobile device (MD) retrieving said unique code from said digital content receiving client device (STB) at triggering by said digital content receiving client device (STB); and
e. said mobile device based on said unique code C read/retrieved requesting said application server (AS) to be associated with said subscription based on said retrieved unique code; and
f. said application server (AS) comparing said unique code of said mobile device (MD) with said generated unique code generated by said application server (AS); and
g. said application server (AS), at successful comparison, associating said mobile device (MD) with said subscription based on said subscription identification.

2. Method for associating a mobile device (MD) with a digital television subscription according to claim 1, **CHARACTERISED IN THAT** said predetermined signal is an IGMP channel change message.

3. Method for associating a mobile device (MD) with a digital television subscription according to claim 1, **CHARACTERISED IN THAT** said predetermined signal is a signal generated responsive to the pushing of a predefined button of a Remote control associated with said digital content receiving client device (STB).

4. Method for associating a mobile device (MD) with a digital television subscription according to claim 1, **CHARACTERISED IN THAT** said unique code generated by said application server (AS) is visualized using a QR code.

5. Method for associating a mobile device (MD) with a digital television subscription according to claim 1, **CHARACTERISED IN THAT** said unique code generated by said application server (AS) is visualized using a QR code and that said step of retrieving said unique code by said mobile device (MD) from said digital content receiving client device (STB) at triggering by said digital content receiving client device (STB) is reading said QR code from a screen coupled to said digital content receiving client device (STB).

6. Digital content receiving client device (STB) for use in a system for associating a mobile device (MD) with a digital television subscription in a digital system comprising an application server (AS) for maintaining said digital television subscription and a digital content receiving client device (STB) with a coupled display, said digital content receiving client device (STB) being coupled to said application server (AS) over an internet protocol network (IPN), **CHARACTERISED IN THAT** said digital content receiving client device (STB) comprises:
a. sending means (SM) for sending a predetermined signal for starting/requesting said associating of said mobile device (MD) with said subscription, to said application server (AS); and
b. receiving means (RM) for receiving a unique code generated by said application server (AS); and
d. code forwarding means (CFM) for forwarding said unique code generated by said application server (AS) towards said mobile device (MD) at triggering by said digital content receiving client device (STB).

7. Application server (AS) for use in a system for associating a mobile device (MD) with a digital television subscription in a digital television system comprising said application server (AS) for maintaining said digital television subscription and a digital content receiving client device (STB) with a coupled display, said digital content receiving client device (STB) being coupled to said application server (AS) over an internet protocol network (IPN), **CHARACTERISED IN THAT** said application server (AS) comprises:
a. intercepting means (IM) for intercepting said predetermined signal for starting said associating of said mobile device (MD) with said subscription; and
b. code generating means (CGM) for at intercepting said predetermined signal, generating a unique code; and
c. subscription identification determination means (SIDM), for at intercepting said predetermined signal, determining an identification from said subscription; and
d. code sending means (CSM) for sending said unique code generated towards said digital content receiving client device (STB); and
e. comparing means (PM) for comparing said unique code received from said mobile device (MD) with said generated unique code generated by said application server (AS); and
g. associating means (AM) for at successful comparison, associating said mobile device (MD) with said subscription based on said subscription identification.

8. Mobile device (MD) for use in a system for associating said mobile device (MD) with a digital television subscription in a digital television system comprising an application server (AS) for maintaining said digital television subscription and a digital content receiving client device (STB) with a coupled display, said digital content receiving client device (STB) being coupled to said application server (AS) over an internet protocol network (IPN), **CHARACTERISED IN THAT** said mobile device (MD) comprises:
a. retrieving means (RM1) for retrieving said unique code from said set-top box (STB) at triggering by said set-top box (STB); and
b. requesting means (REM) for requesting said application server (AS) to compare said unique code of said mobile device (MD) with said generated unique code generated by said application server (AS).
